# EUROPÄISCHE PATENTANMELDUNG

(11) **EP 1 592 116 A2**
(43) Veröffentlichungstag der Anmeldung: **02.11.2005**
(21) Anmeldenummer: 05008852.5
(22) Anmeldetag: 22.04.2005
(51) Int. Cl.: H02M 3/156

(54) **Gleichspannungswandler**

(30) Priorität: 30.04.2004 DE 102004021344
(71) Anmelder: Micronas GmbH, 79108 Freiburg (DE)
(72) Erfinder: Witte, Franz-Otto, Dr., 79312 Emmendingen (DE); Bock, Christian, Dr., 79108 Freiburg (DE)
(74) Vertreter: Göhring, Robert

(57) **Zusammenfassung**

Ein Gleichspannungswandler hat einen Schalter (1), der durch ein periodisches Referenzsignal (U_{ref}) zwischen einem offenen und einem geschlossenen Zustand umschaltbar ist. Durch das Tastverhältnis des Referenzsignals ist das Verhältnis.zwischen einer Eingangsspannung (V_{cc}) und einer Ausgangsspannung (Vₒᵤₜ) des Gleichspannungswandlers festgelegt. Eine Referenzfrequenzquelle (6, 7, 8, 9) zum Liefern des Referenzsignals (U_{ref}) umfasst eine Modulationsschaltung (6) zum Modulieren der Frequenz und/oder des Referenzsignals.

## Beschreibung

Die vorliegende Erfindung betrifft einen nach dem Prinzip der Pulsmodulation arbeitenden Gleichspannungswandler, das heißt einen Gleichspannungswandler mit einem durch ein Referenzsignal zwischen einem offenen und einem geschlossenen Zustand umschaltbaren Schalter, durch dessen Tastverhältnis eine vorgebbare Ausgangsspannung des Gleichspannungswandlers festlegbar ist.

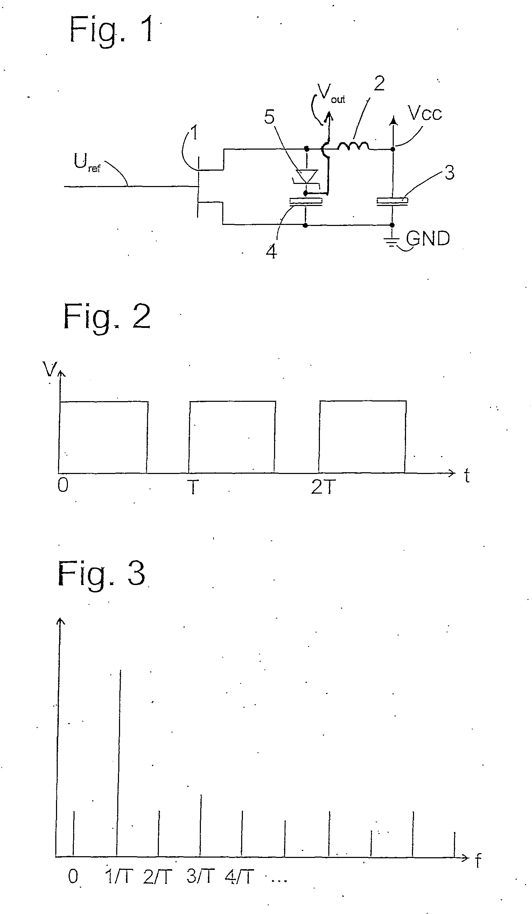

Ein Gleichspannungswandler dieses Typs ist stark schematisiert in Fig. 1 dargestellt. Er umfasst einen in der Fig. als Feldeffekttransistor dargestellten Leistungsschalter 1, an dessen Steuereingang ein oszillierendes Referenzsignal U_{ref} anliegt. Hauptanschlüsse des Leistungsschalters 1, zwischen denen ein Stromfluss durch das am Steueranschluss anliegende Referenzsignal regelbar ist, sind in Reihe mit einer Induktivität 2 zwischen Versorgungspotentiale Vcc, GND geschaltet. Ein erster Glättkondensator 3 ist unmittelbar zwischen die zwei Versorgungspotentiale geschaltet. Ein zweiter Glättkondensator 4 ist in Reihe mit einer Zenerdiode 5 parallel zum Leistungsschalter 1 angeordnet. Die Kapazität der Glättkondensatoren 3, 4 ist in Abhängigkeit von der Frequenz des Referenzsignals und dem Wert der Induktivität 2 so gewählt, dass an einer zwischen dem zweiten Glättkondensator 4 und der Zenerdiode 5 angeordneten Ausgangsklemme Vₒᵤₜ des Gleichspannungswandlers eine hinreichend konstante, zum Tastverhältnis des Referenzsignals U_{ref} proportionale Ausgangsspannung resultiert.

Jeder Wechsel des Leistungsschalters 1 vom offenen in den geschlossenen Zustand und umgekehrt führt zu abrupt ansteigenden Stromflüssen in dem Gleichspannungswandler, die sich als Störungsimpulse auf die Ausgangsspannung Vₒᵤₜ oder die Versorgungspotentiale Vcc und GND übertragen. Dies hat zur Folge, dass sich Störsignale mit dem in Fig. 3 schematisch gezeigten Spektrum den genannten Potentialen überlagern. Das Spektrum besteht aus diskreten, äquidistanten Linien bei der Frequenz f=1/T des Referenzsignals U_{ref} und deren ganzzahligen Vielfachen. Diese Störsignale können die Funktion von mit den gleichen Versorgungsspannungen wie der Gleichspannungswandler oder mit dessen Ausgangsspannung versorgten Schaltungen sowie von anderen Schaltungen in der Nähe beeinträchtigen.

Aufgabe der Erfindung ist, einen Gleichspannungswandler der eingangs genannten Art anzugeben, bei dem die Gefahr einer Störung benachbarter Schaltungen durch das Schalten des Gleichspannungswandlers erheblich verringert ist.

Die Aufgabe wird gelöst durch einen Gleichspannungswandler mit den Merkmalen des Anspruches 1.

Indem die Modulationsschaltung das Referenzsignal phasen-und/oder frequenzmoduliert liefert, wird erreicht, dass das Schalten des Leistungsschalters nicht mehr exakt periodisch stattfindet, sondern dass der Schaltzeitpunkt in einem von der Stärke der Modulation abhängigen Maß streut. Während bei dem herkömmlichen Gleichspannungswandler das Spektrum der Störsignale idealisiert als ein Linienspektrum mit Linien von vernachlässigbarer Bandbreite aber sehr hohen Spitzenwerten der Intensität aufgefasst werden kann, werden bei dem erfindungsgemäßen Gleichspannungswandler diese "Linien" unter Beibehaltung des Integrals ihrer Intensität über die Frequenz durch die Modulation verbreitert, so dass die Intensitätsspitzen des Spektrums stark abnehmen.

Vorzugsweise umfasst der erfindungsgemäße Gleichspannungswandler einen Oszillator, der hinsichtlich Phase und/oder Frequenz steuerbar ist, und die Modulationsschaltung liefert ein periodisches oder zufälliges Steuersignal an den Oszillator.

Die Modulation des Referenzsignals kann im Prinzip von beliebiger Art sein; technisch besonders einfach realisierbar ist eine periodische Modulation, d.h. eine periodische Änderung der Phase und/oder Periode des Referenzsignals, z. B. durch eine Sinusschwingung.

Unter dem Gesichtspunkt der Störungsunterdrückung besonders wirksam ist jedoch eine stochastische Modulation der Periode und/oder Phase des Referenzsignals. Eine solche stochastische Modulation kann mit Hilfe von echten Zufallszahlen oder von Pseudo-Zufallszahlen erfolgen, wobei im Folgenden zwischen diesen zwei Alternativen nicht unterschieden wird.

Eine Modulation der Phase erhält man, indem zum Sollzeitpunkt des nächsten Schaltereignisses, der ggf. schon durch das Tastverhältnis modifiziert ist, eine Zufallszahl addiert wird. Eine negative Zufallszahl wird entsprechend subtrahiert.

Eine Modulation der Frequenz erhält man, indem der Sollzeitpunkt des nächsten Schaltereignisses nicht auf dem ursprünglichen und ggf. durch das Tastverhältnis modifizierten Taktzeitpunkt liegt, sondern vom derzeitigen Schaltzeitpunkt aus durch Addition der ggf. durch das Tastverhältnis modifizierten Teilperiode gebildet wird. Zu diesem neuen Sollzeitpunkt wird wiederum die Zufallszahl vorzeichenrichtig addiert. Durch diese Verkettung der Zeiten werden die Zufallszahlen akkumuliert.

Vorteilhafterweise wird bei Frequenzmodulation durch eine entsprechende Konstruktion des Zufallszahlengenerators das zeitliche Integral über viele Zufallszahlen zu Null; damit bleibt im Mittel die ursprüngliche unmodulierte Frequenz des Taktoszillators erhalten.

Alternativ ist auch ein Aufbau der Referenzsignalquelle denkbar, bei der ein Oszillator, der fest frequent sein kann, ein Grundschwingungssignal an die Modulationsschaltung liefert und diese das Referenzsignal durch Phasen- und/oder Periodenmodulation des Grundschwingungssignals erzeugt.

Das Tastverhältnis des Referenzsignals ist vorzugsweise durch eine Steuerschaltung anhand eines Sollwertes und eines Istwertes der Ausgangsspannung des Gleichspannungswandlers gesteuert. Eine Zeitkonstante, mit der die Steuerschaltung bei einer Differenz zwischen Soll- und Istwert der Ausgangsspannung das Tastverhältnis nachführt, sollte größer als die Periode der Modulation sein, um zu verhindern, dass die Steuerschaltung versucht, Auswirkungen der Modulation auf die Ausgangsspannung gegenzusteuern und dadurch möglicherweise instabil wird.

Weitere Merkmale und Vorteile ergeben sich aus der nachfolgenden Beschreibung von Ausführungsbeispielen unter Bezugnahme auf die beigefügten Figuren. Es zeigen:
- Fig. 1,: bereits behandelt, ein schematisches Schaltbild eines herkömmlichen Gleichspannungswandlers;
- Fig. 2,: bereits behandelt, das Referenzsignal des herkömmlichen Gleichspannungswandlers;
- Fig. 3,: bereits behandelt, das Störspektrum des herkömmlichen Gleichspannungswandlers mit unsymmetrischem Tastverhältnis;
- Fig. 4: ein schematisches Schaltbild einer ersten Ausgestaltung des erfindungsgemäßen Gleichspannungswandlers;
- Fig. 5: das Referenzsignal des erfindungsgemäßen Gleichspannungswandlers als Funktion der Zeit;
- Fig. 6: das Störspektrum einer ersten Ausgestaltung des erfindungsgemäßen Gleichspannungswandlers mit sinusförmiger Phasenmodulation des Referenzsignals;
- Fig. 7: das Störspektrum einer zweiten Ausgestaltung des erfindungsgemäßen Gleichspannungswandlers mit stochastischer Phasenmodulation des Referenzsognals;
- Fig. 8: das Störspektrum einer dritten Ausgestaltung des erfindungsgemäßen Gleichspannungswandlers mit stochastischer Frequenzmodulation des Referenzsignals.

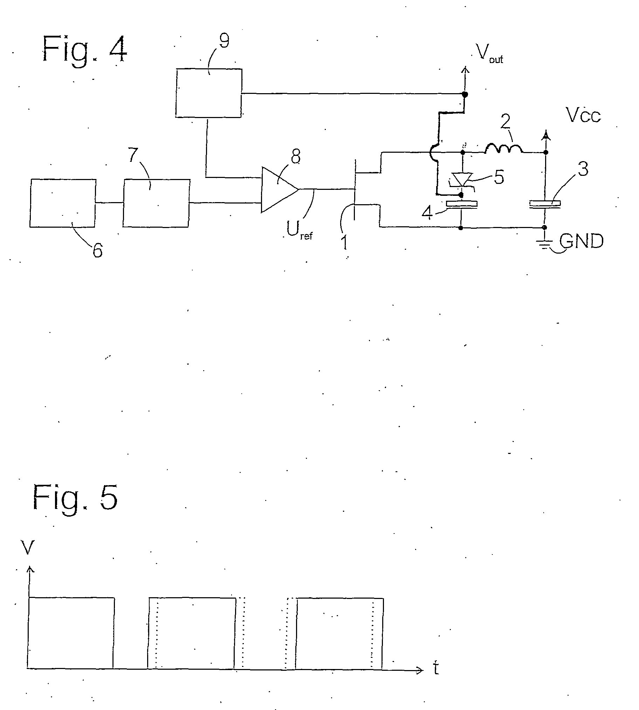

Die Komponenten 1 bis 5 des in Fig. 4 gezeigten erfindungsgemäßen Gleichspannungswandlers sind identisch mit den entsprechenden Komponenten des Gleichspannungswandlers aus Fig. 1 und werden hier nicht erneut erläutert.

Mit dem Bezugszeichen 6 ist eine Modulationsschaltung bezeichnet, die ein Modulationssignal an einen Steuereingang eines spannungsgesteuerten Oszillators 7 liefert. Bei der Modulationsschaltung 6 kann es sich um einen Oszillator handeln, der ein periodisches Signal mit kontinuierlich veränderlichem Pegel wie etwa eine Sinus- oder Dreieckschwingung mit einer Periode T₆ als Modulationssignal erzeugt. Alternativ kann sie als Zufallsgenerator realisiert sein, der ein stochastisch schwankendes Modulationssignal erzeugt.

Der spannungsgesteuerte Oszillator 7 kann so ausgelegt sein, dass er ein Ausgangssignal mit einer zur Amplitude des Modulationssignals direkt proportionalen Frequenz liefert; in diesem Fall sollte der Mittelwert des Modulationssignals, der die mittlere Frequenz des Ausgangssignals bestimmt, von Null verschieden sein. Alternativ kann der spannungsgesteuerte Oszillator 7 ausgelegt sein, um bei verschwindendem Modulationssignal ein Ausgangssignal mit einer festen, nichtverschwindenden Frequenz zu liefern; in diesem Fall kann das - dann vorzugsweise im Mittel verschwindende - Modulationssignal eingesetzt werden, um eine zu seiner Amplitude proportionale Abweichung der Frequenz des Ausgangssignals von seiner festen Frequenz oder - bei gleichbleibender Frequenz - eine amplitudenproportionale Phasenverschiebung des Ausgangssignals zu steuern. Das Ausgangssignal des spannungsgesteuerten Oszillators 7 hat die Form einer Sägezahn- oder Dreieckschwingung und wird an einen ersten Eingang eines Komparators 8 geliefert. Die Periode T₇ des spannungsgesteuerten Oszillators 7 ist deutlich kürzer als T₆ im Falle eines periodischen Modulationssignals. Am zweiten Eingang des Komparators 8 liegt ein Steuersignal von einer Steuerschaltung, z. B. einem PI-Regler 9, an.

Der PI-Regler 9 empfängt an einem ersten Eingang die tatsächliche Ausgangsspannung Vₒᵤₜ des Gleichspannungswandlers und an einem zweiten Eingang einen Sollwert dieser Ausgangsspannung und führt mit einer Zeitkonstante T₉ den Wert des von ihm erzeugten Steuersignals nach, um über eine Modifikation des Tastverhältnisses eine Angleichung der Ist-Ausgangsspannung an die Soll-Ausgangsspannung zu erreichen. Die Zeitkonstante T₉ ist im Allgemeinen deutlich größer als die Periode T₆, um sicherzustellen, dass der PI-Regler 9 nicht versucht, Änderungen der Ausgangsspannung Vₒᵤₜ entgegenzuregeln, die aus der von der Modulationsschaltung 6 bewirkten Frequenzmodulation des Ausgangssignals des spannungsgesteuerten Oszillators 7 resultieren.

Hierbei kann das Steuersignal der Steuerschaltung, insbesondere des PI-Reglers 9, abweichend von der in Fig. 4 dargestellten Ausführungsform anstatt auf einen Komparator 8 direkt auf den Oszillator 7 bzw. dessen Steuerung einwirken und dessen Frequenz zur Angleichung von Vₒᵤₜ an den Sollwert entsprechend nachführen. Auf die Verwendung eines Komparators könnte so verzichtet werden.

Das vom Komparator 8 ausgegebene Referenzsignal U_{ref} hat hier die in Fig. 5 gezeigte Form mit Rechteckimpulsen, die im Vergleich zum herkömmlichen Referenzsignal der Fig. 2, in Fig. 5 als punktierter Umriss eingezeichnet, zeitlich vor oder zurück versetzt sein können. Das Tastverhältnis des Referenzsignals, das heißt die Breite der Impulse im Verhältnis zur Periodendauer, ist von der Modulation im Mittel unbeeinflusst.

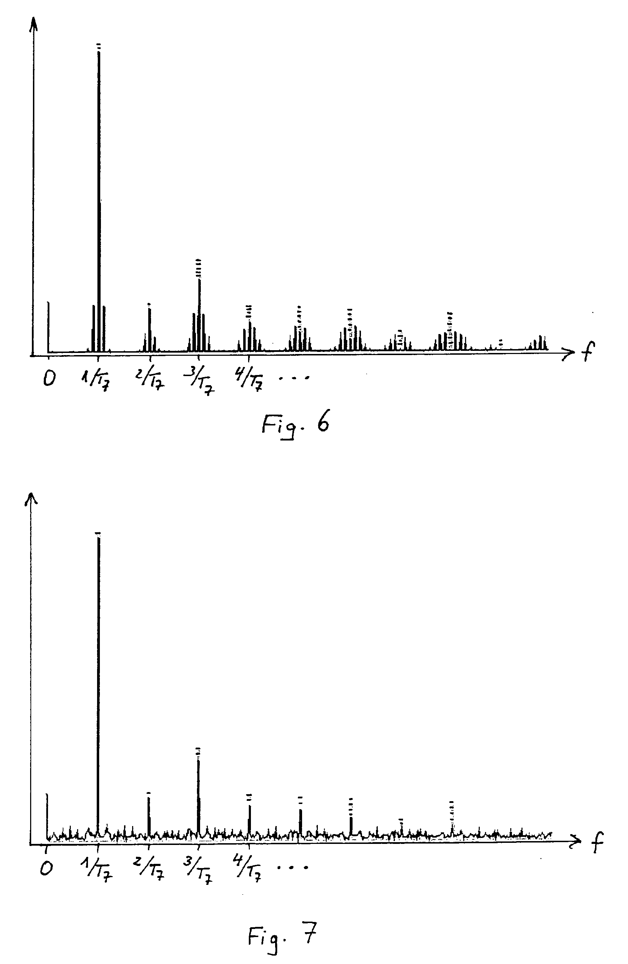

Fig. 6 zeigt als durchgezogene Kurve das Störspektrum des Gleichspannungswandlers aus Fig. 4 unter der Annahme, dass das von der Modulationsschaltung 6 an den spannungsgesteuerten Oszillator 7 gelieferte Phasen-Modulationssignal ein Sinus ist; zum Vergleich ist das Spektrum eines Gleichspannungswandlers mit unmoduliertem Referenzsignal, wie in Fig. 3 gezeigt, gestrichelt eingezeichnet. Die Grundwelle taucht bei der Frequenz 1/T₇ des spannungsgesteuerten Oszillators 7 auf, Oberwellen bei ungeradzahligen Vielfachen davon. Die Spektralanteile bei der Frequenz 0 sowie bei geradzahligen Vielfachen von 1/T₇ entstehen durch ein Tastverhältnis des Referenzsignals mit ungleicher Ein- und Ausschaltzeit. Die Phasenmodulation des Oszillators 7 durch das sinusförmige Modulationssignal gemäß der Erfindung bewirkt eine Abnahme der Amplituden von Grund- und Oberwellen bei gleichzeitigem Auftauchen von diskreten Seitenlinien der Ordnung n im Abstand von ± n/T₆ beiderseits der Spektrallinie der Grundwelle bzw. in entsprechenden Vielfachen dieses Abstands beiderseits der Linien der Oberwelle. Die Amplituden von Grundwelle bzw. Oberwellen einerseits und Seitenlinien andererseits werden von den Besselfunktionen erster Art n-ter Ordnung beschrieben und hängen vom Modulationsindex, d.h. der Stärke, mit der das Modulationssignal das Referenzsignal moduliert, ab.

Fig. 7 zeigt als durchgezogene Linie ein Störspektrum des Gleichspannungswandlers aus Fig. 4 unter der Annahme, dass die Modulationsschaltung 6 ein Modulationssignal mit durch eine Zufallszahlfolge definierten Spannungswerten ist, mit deren fortlaufender Summe das Ausgangssignal des Oszillators 7 phasenmoduliert wird; zum Vergleich ist wieder das Spektrum bei unmoduliertem Referenzsignal gestrichelt eingezeichnet. Grund-und Oberwellen sind auch hier deutlich verkleinert, wobei anstatt der diskreten Seitenlinien der Fig. 6 hier kontinuierliche Seitenbänder entstehen, deren höchste Amplituden deutlich unter denen der Seitenlinien von Fig. 6 liegen.

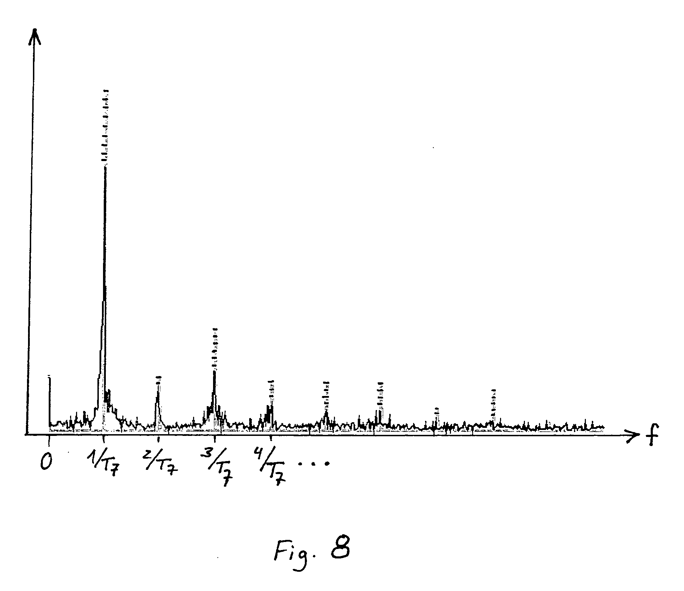

Die durchgezogene Linie in Fig. 8 zeigt das Störspektrum des Gleichspannungswandlers aus Figur 4 unter der Annahme, dass die Modulationsschaltung 6 erneut ein Modulationssignal mit durch eine Zufallsfolge definierten Spannungswerten ist, mit deren fortlaufender Summe das Ausgangssignal des Oszillators hier allerdings frequenzmoduliert wird. Zu Vergleichszwecken ist wiederum das Spektrum bei unmoduliertem Referenzsignal gestrichelt eingezeichnet. Erneut entstehen kontinuierliche Seitenbänder. Zudem fallen die Amplituden der Grund- und Oberwellen geringer aus als im Fall des stochastisch phasenmodulierten Referenzsignals in Fig. 7. Dies beruht darauf, dass die resultierende (akkumulierte) Phasenabweichung bei der stochastischen Frequenzmodulation im Laufe der Zeit sehr viel stärker von der ursprünglichen Phase abweichen kann, als dies bei der stochastischen Phasenmodulation der Fall ist.

Da der Energiegehalt der Grundschwingung und der einzelnen O-berschwingungen der gleiche wie bei dem herkömmlichen Gleichspannungswandler der Fig. 1 ist, ist das Frequenzintegral über die Intensität jeder einzelnen erfindungsgemäß verbreiterten Linie genauso groß wie das Integral über die entsprechende Linie des Störspektrums aus Fig. 3. Die maximale Intensität als Funktion der Frequenz ist jedoch erheblich vermindert.

Obwohl im Zusammenhang mit den Figuren immer ein sogenannter "step-up converter" gezeigt und erläutert wurde, kann die Erfindung auch bei sog. "step-down convertern" eingesetzt werden.

## Patentansprüche

1. Gleichspannungswandler mit einem durch ein Referenzsignal (U_{ref}) zwischen einem offenen und einem geschlossenen Zustand umschaltbaren Schalter (1), durch dessen Tastverhältnis eine vorgebbare Ausgangsspannung (Vₒᵤₜ) des Gleichspannungswandlers festlegbar ist, und einer Referenzsignalquelle (6, 7, 8, 9) zum Liefern des Referenzsignals (U_{ref}), **dadurch gekennzeichnet, dass** die Referenzsignalquelle eine Modulationsschaltung (6) zum Erzeugen des Referenzsignals mit modulierter Frequenz und/oder Phase umfasst.

2. Gleichspannungswandler nach Anspruch 1, **dadurch gekennzeichnet, dass** die Modulation periodisch ist.

3. Gleichspannungswandler nach Anspruch 1, **dadurch gekennzeichnet, dass** die Modulation stochastisch ist.

4. Gleichspannungswandler nach einem der Ansprüche 1 bis 3, **dadurch gekennzeichnet, dass** das Tastverhältnis des zwischen einem offenen und einem geschlossenen Zustand umschaltbaren Schalters (1) eine Ausgangsspannung (Vₒᵤₜ) des Gleichspannungswandlers festlegt.

5. Gleichspannungswandler nach einem der vorhergehenden Ansprüche, **dadurch gekennzeichnet, dass** die Referenzsignalquelle einen gesteuerten Oszillator (7) aufweist, und dass die Modulationsschaltung (6) ein Steuersignal zum Beeinflussen von Frequenz und/oder Phase des von dem Oszillator (7) gelieferten Referenzsignals an den Oszillator liefert.

6. Gleichspannungswandler nach einem der vorhergehenden Ansprüche, **dadurch gekennzeichnet, dass** der Schalter (1) ein CMOS-Transistor ist.

7. Gleichspannungswandler nach einem der vorhergehenden Ansprüche, **dadurch gekennzeichnet, dass** die Referenzsignalquelle eine Steuerschaltung (9) zum Steuern des Tastverhältnisses des Referenzsignals (U_{ref}) anhand eines Sollwerts und eines Istwerts der Ausgangsspannung (Vₒᵤₜ) des Gleichspannungswandlers umfasst.

8. Gleichspannungswandler nach Anspruch 7, **dadurch gekennzeichnet, dass** eine Zeitkonstante, mit der die Steuerschaltung bei einer Differenz zwischen Soll- und Istwert der Ausgangsspannung das Tastverhältnis nachführt, größer als die Periode der Modulation ist, bzw. im Fall einer nichtperiodischen Modulation deutlich größer als der zeitliche Abstand zweiter aufeinanderfolgender Modulierungsvorgänge.

9. Gleichspannungswandler nach einem der Ansprüche 1 bis 8, **dadurch gekennzeichnet, dass** bei größer werdendem Ausgangsstrom das Tastverhältnis so nachgeregelt wird, dass die vorgebbare Ausgangsspannung (Vₒᵤₜ)erreicht wird.
